# EUROPÄISCHE PATENTSCHRIFT

(11) **EP 0 365 911 B1**
(45) Veröffentlichungstag und Bekanntmachung des Hinweises auf die Patenterteilung: **08.12.1993**
(21) Anmeldenummer: 89118791.6
(22) Anmeldetag: 10.10.1989
(51) Int. Cl.: B29C 45/17

(54) **Presse, insbesondere Spritzgiessmaschine**
Press, in particular an injection-moulding machine
Presse, notamment machine à mouler par injection

(30) Priorität: 22.10.1988 DE 3836097
(43) Veröffentlichungstag der Anmeldung: 02.05.1990
(73) Patentinhaber: Krauss-Maffei Aktiengesellschaft, 80997 München (DE)
(72) Erfinder: Holzinger, Reinhard, D-8027 Neuried (DE); Weiss, Gerhard, Dipl.-Ing., D-8351 Lalling (DE)

(56) Entgegenhaltungen:
- EP-A- 0 313 035
- CH-A- 576 829
- DE-A- 3 505 870
- US-A- 4 285 384

## Beschreibung

Die vorliegende Erfindung betrifft eine Presse, insbesondere Spritzgießmaschine, mit den Merkmalen des Oberbegriffs des Patentanspruchs 1. Die Erfindung ist insbesondere auf eine Spritzgießmaschine mit horizontaler Achse gerichtet.

Derartige Pressen besitzen eine feststehende Platte und eine bewegliche Platte, die an ihren zugewandten Seiten Werkzeuge, insbesondere Gesenk- oder Formteile oder -hälften tragen, sowie eine Abstützplatte. Die bewegliche Platte ist in Richtung auf die feststehende Platte und von dieser weg auf paralell angeordneten Trag- und Führungssäulen verschiebbar, wobei die entsprechenden Werkzeugteile bzw. -hälften miteinander in oder außer Eingriff gebracht werden.

Die Zahl der Trag- und Führungssäulen, entlang denen die bewegliche Platte verschiebbar ist, beträgt mindestens zwei.

Es versteht sich, daß dieselbe Presse bzw. Spritzgießmaschine zur Herstellung von verschiedenen Gegenständen verwendet wird, so daß nach Beendigung der Herstellung des einen Gegenstandes zur Aufnahme der Fertigung des anderen Gegenstandes die entsprechenden Werkzeuge, d. h. Gesenkteile, Formteile bzw. -hälften, ausgetauscht werden müssen.

Bei bekannten Pressen ist dies eine sehr komplizierte und zeitaufwendige Arbeit, und dies um so mehr, je größer die Gesenke oder Formen sind.

Es ist bereits eine Presse bzw. Spritzgießmaschine bekannt, mit der sich die für den Austausch von Gesenken oder Formen an Pressen benötigte Zeit erheblich reduzieren läßt. Diese Presse ist in der DE-OS 35 05 870 beschrieben. Bei der bekannten Presse sind die zwei Gesenkteile, die eine gegebene Gesenkeinheit bei einer Presse bilden, an zugehörigen Hilfstragplatten angeordnet, und diese sind ihrerseits an der feststehenden Platte und der bewegbaren Platte der Presse durch Betätigung von Hydraulikeinheiten in einfacher Weise befestigt. Über diese Hilfstragplatten wird eine rasche Ein- und Ausbaumöglichkeit der entsprechenden Werkzeuge erreicht. Bei dieser Ausführungsform wird jedoch beim Austausch der Werkzeuge die Lage der Trag- und Führungssäulen nicht verändert, so daß der zum Austausch zur Verfügung stehende Raum durch die Anordnung der Säulen begrenzt ist. Insbesondere lassen sich hierbei keine Werkzeuge einbauen, die eine größere Abmessung als der Säulenabstand besitzen.

Aus der CH-A-576 829 ist eine Vorrichtung zum Halten und Herausziehen mindestens einer Säule einer Spritzgießmaschine bekannt, die eine Spannvorrichtung für eine Säulenmutter aufweist. Diese Spannvorrichtung ist einstückig mit der Säulenmutter ausgebildet.

Aus der US-A-4 285 384 ist es bekannt, die Stirnfläche einer Säule mit einem Bolzen zum Verspannen in Eingriff zu bringen.

Eine Presse, insbesondere Spritzgießmaschine, mit den Merkmalen des Oberbegriffs des Patentanspruchs 1 ist aus der EP-A-0 313 035 bekannt. Bei dieser bekannten Presse befindet sich vor einer Holmmutter bzw. vor dem Ende eines Holmes ein Trägerzapfen, der von einem Rahmen getragen wird. Der Rahmen ist an der feststehenden Formträgerplatte befestigt. Der Trägerzapfen ist an dem Rahmen gelagert, der die Oberseite des Zapfens abdeckt, so daß keine Möglichkeit für die Durchführung eines Spannelementes gegeben ist.

Der Erfindung liegt die Aufgabe zugrunde, eine Presse der angegebenen Art zu schaffen, bei der der Werkzeugaustausch besonders effektiv und platzsparend durchgeführt werden kann.

Die vorstehend genannte Aufgabe wird erfindungsgemäß durch eine Presse, insbesondere Spritzgießmaschine, mit den kennzeichnenden Merkmalen des Patentanspruchs 1 gelöst.

Bei der erfindungsgemäß ausgebildeten Presse wird mindestens eine Trag- und Führungssäule axial so weit verschoben, bis der für den Werkzeugeinbau benötigte Freiraum geschaffen ist. Hierdurch lassen sich Werkzeuge einbauen, die größer sind als die lichte Weite der Maschine, beispielsweise Fittingwerkzeuge mit überstehenden Zylindern. Naturgemäß können auch Werkzeuge eingebaut werden, deren Größe geringer ist als die lichte Weite der Maschine (Säulenabstand), wobei hierbei der Werkzeugeinbau in besonders einfacher und bequemer Weise erfolgen kann, da besonders viel Platz zur Verfügung steht. Insgesamt läßt sich somit mit der erfindungsgemäßen Lösung ein sehr rascher Werkzeugwechsel durchführen, wodurch die Standzeiten der entsprechenden Maschine wesentlich herabgesetzt werden können.

Die erfindungsgemäße Lösung besitzt ferner den Vorteil, daß sie - abgesehen von den jeweiligen Bedienungsvorgängen durch Betätigung von Schaltern etc. - selbsttätig abläuft, so daß manuelle Vorgänge, wie beispielsweise das Lösen von Befestigungsmitteln, Richtvorgänge, Umrüstvorgänge, entfallen können.

Die erfindungsgemäße Lösung geht von dem Grundgedanken aus, mindestens eine Säule der Presse bzw. Spritzgießvorrichtung nicht mit der feststehenden Platte und Abstützplatte fest zu verbinden, sondern damit zu verspannen, was den Vorteil mit sich bringt, daß einerseits hierdurch eine Verbindung erreicht wird, die den entsprechenden Belastungen durch die durchzuführenden Arbeitsvorgänge Rechnung trägt, während andererseits die Möglichkeit einer raschen Lösung der Verbindung gewonnen wird, wenn ein entsprechender Werkzeugaustausch durchgeführt werden soll. Das Verspannen geschieht sowohl an der feststehenden Platte als auch an der Abstützplatte, so daß beide Endbereiche der jeweiligen Säule eingespannt sind.

Die Säule selbst besitzt einen Gewindeabschnitt und ist mit einer Säulenmutter verschraubt, wobei die Säulenmutter die feststehende Platte hintergreift. Am gegenüberliegenden Ende weist die Säule vorzugsweise einen Kopf auf, der die Abstützplatte hintergreift. Durch Anziehen der Säulemutter wird somit die Säule zwischen der Abstützplatte und der feststehenden Platte verspannt. Zusätzlich hierzu sind weitere Spannvorrichtungen an der Abstützplatte und der feststehenden Platte vorgesehen, die erforderlich sind, um die auftretenden Werkzeugöffnungskräfte übertragen zu können.

Diese zusätzlichen Spannvorrichtungen bestehen aus einer zweiten Spannvorrichtung, mit der die Säule und Säulenmutter gegen die feststehende Platte gepreßt werden, und einer ersten Spannvorrichtung, mit der die Säule gegen die Abstützplatte gepreßt wird. Die Spannvorrichtungen sind rasch lösbar, so daß die Säule bei abgeschraubter Mutter und gelösten Spannvorrichtungen mit Hilfe der vorgesehenen Verschiebevorrichtung axial durch die feststehende Platte und die Abstützplatte verschoben werden kann, bis ein entsprechender Freiraum für den Werkzeugaustausch zur Verfügung steht. Der Verschiebeweg der Säule wird vorzugsweise durch Grenztaster begrenzt, welche bei Erreichen des maximalen Verschiebeweges die Verschiebevorrichtung aussteuern.

Zum Abschrauben der Säulenmutter von einem entsprechenden Gewindeabschnitt der Säule weist die erfindungsgemäß ausgebildete Presse eine Drehvorrichtung auf. Diese Drehvorrichtung umfaßt vorzugsweise einen Getriebemotor, der die am Außendurchmesser mit einer Verzahnung ausgebildete Säulenmutter antreibt. Beim Lösen der Säulenmutter wird diese von der Säule auf eine koaxial zu dieser angeordnete Gewindebüchse mit Außengewinde geschraubt. Die jeweiligen Endlagen werden durch Grenztaster überwacht. Die Gewindebüchse ist in einem stirnseitig von der Säule angeordneten Gehäuse fest gelagert.

Erfindungsgemäß weist die zweite Spannvorrichtung einen mit der Stirnfläche der Säule in Eingriff bringbaren Bolzen auf, der vorzugsweise mit Hilfe eines kraftbetätigten Zylinders gegen die Stirnfläche der Säule preßbar ist. Dieser Bolzen ist vorzugsweise axial verschiebbar in der Gewindebüchse angeordnet. Bei Ausübung eines Drucks vom kraftbetätigten Zylinder gegen die Endfläche des Bolzens wird dessen Vorderfläche gegen die Stirnfläche der Säule gepreßt, so daß die Säule über die damit in Schraubeingriff stehende Säulenmutter fest mit der feststehenden Platte (feste Werkzeugaufspannplatte) verspannt wird. Bei Druckentlastung an der Innenfläche des Bolzens wird die Verspannung gelöst.

Die erste Spannvorrichtung umfaßt zweckmäßigerweise ebenfalls einen kraftbetätigten Zylinder, wobei dessen Kolbenstange direkt mit dem Säulenkopf zusammenwirkt. Beide kraftbetätigte Zylinder (Hydraulikzylinder) besitzen vorzugsweise keilförmige Kolbenstangen, die mit entsprechenden Schrägflächen am Bolzen bzw. Säulenkopf zusammenwirken. Durch derartig ausgebildete Keilspannelemente läßt sich die Säule einfach und sicher verspannen, und die Verspannung kann sehr rasch und einfach durch entgegengesetzte Beaufschlagung des Kolbens im kraftbetätigten Zylinder wieder gelöst werden.

Wie erwähnt, umfaßt die erfindungsgemäße ausgebildete Presse bzw. Spritzgießmaschine desweiteren eine Verschiebevorrichtung, mit der nach Abschrauben der Säulenmutter von der Säule und Lösen der Verspannung der Säule mit der feststehenden Platte und der Abstützplatte die Säule axial verschiebbar ist. Diese Verschiebevorrichtung umfaßt zweckmäßigerweise ebenfalls einen kraftbetätigten Zylinder (Hydraulikzylinder), dessen Kolbenstange mit dem Säulenkopf in Eingriff steht. Durch Ausfahren der Kolbenstange wird die Säule axial durch die feststehende Platte und die Abstützplatte gezogen, so daß der entsprechende Freiraum zum Werkzeugaustausch bzw. zum Einbau von Werkzeugen, die größer sind als die lichte Weite der Maschine, erreicht wird. Die Endstellungen der Säule werden durch entsprechende Grenztaster überwacht, die bei Erreichen der Endstellung die Betätigung des kraftbetätigten Zylinders stoppen.

Zum Zurückbewegen der Säule und zum Verschrauben und Verspannen derselben finden die vorstehend angeführten Vorgänge in der umgekehrten Reihenfolge statt.

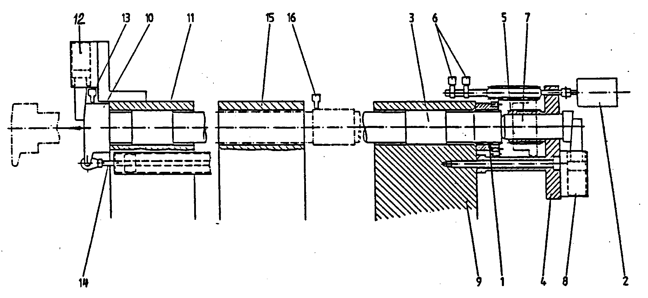

Die Erfindung wird nachfolgend anhand eines Ausführungsbeispiels in Verbindung mit der Zeichnung im einzelnen erläutert. Die einzige Figur zeigt einen schematischen Längsschnitt durch einen Teil einer erfindungsgemäß ausgebildeten Spritzgießmaschine.

Bei der in der Figur dargestellten Spritzgießmaschine handelt es sich um eine solche mit horizontaler Achse. Die Figur zeigt einen Längsschnitt nur durch denjenigen Teil der Maschine, der zur Erläuterung der Erfindung von Bedeutung ist.

Wie man der Figur entnehmen kann, besitzt die Spritzgießmaschine eine feststehende Platte 9 (feste Werkzeugaufspannplatte), eine bewegliche Platte 15 (bewegliche Werkzeugaufspannplatte) und eine Abstützplatte 11. Die bewegliche Platte 15 ist entlang Führungs- und Tragsäulen 3, von denen nur eine dargestellt ist, hin- und herbewegbar. Wenn sich die bewegliche Platte 15 auf die feststehende Platte 9 zubewegt, werden die an den beiden Platten befindlichen Werkzeuge (Gesenkteile, Formteile bzw. entsprechende Hälften) gegeneinander bewegt, während sie bei der Bewegung der beweglichen Platte 15 in der Figur nach links voneinander getrennt werden.

Um bei der dargestellten Maschine einen raschen und bequemen Austausch der Werkzeuge bzw. den Einbau von Werkzeugen, deren Abmessungen den Abstand zwischen zwei Säulen übersteigen, ermöglichen zu können, ist mindestens eine Säule in einer in der Figur dargestellten Art und Weise angeordnet und ausgebildet, so daß die Säule 3 in der Figur soweit nach links bewegt werden kann, daß ein genügender Freiraum zur Montage des entsprechenden Werkzeuges geschaffen wird. Die entsprechende Stellung der Säule im herausgezogenen Zustand ist in der Figur strichpunktiert dargestellt.

Die dargestellte Säule 3 besitzt an ihrem in der Figur linken Ende einen Säulenkopf 10 und an ihrem in der Figur rechten Ende einen Gewindeabschnitt, der mit einer Säulenmutter 1 verschraubt ist. Wie man der Figur entnehmen kann, liegen in der dargestellten Stellung der Säulenkopf 10 und die Säulenmutter 1 an jeweiligen Flächen der Abstützplatte 11 und der feststehenden Platte 9 an, die von der beweglichen Platte 15 abgewandt sind. Durch Anziehen der Säulenmutter 1 wird somit bereits ein gewisser Verspannungseffekt der Säule mit den beiden Platten 9 und 11 erreicht.

Um die auftretenden Werkzeugsöffnungskräfte übertragen zu können, ist es jedoch erforderlich, weitere Verspannungsmaßnahmen vorzusehen. Dies wird bei der dargestellten Ausführungform durch eine erste und zweite Spannvorrichtung erreicht, die mit der feststehenden Platte 9 und der Abstützplatte 11 zusammenwirken und die Säule mit diesen Platten verspannen. Die zweite Spannvorrichtung umfaßt dabei einen koaxial zur Säule 3 angeordneten Bolzen 7, dessen von der Säule abgewandte Endfläche eine Schrägfläche besitzt. Mit dieser Schrägfläche wirkt eine an einer Kolbenstange eines kraftbetätigten Zylinders 8 (Hydraulikzylinder) angeordnete Schrägfläche zusammen. Bei Herausbewegung des Kolbens aus dem kraftbetätigten Zylinder 8 wird somit der Bolzen 7 durch Aneinandergleiten der beiden Schrägflächen gegen die Stirnfläche der Säule 3 gepreßt. Wird der Kolben in den Zylinder 8 eingefahren, wird die Pressung gelöst.

Die erste Spannvorrichtung besitzt einen kraftbetätigten Zylinder 12, dessen Kolbenstange ebenfalls eine Schrägfläche aufweist, die direkt mit einer Schrägfläche am Säulenkopf 10 zusammenwirkt. In entsprechender Weise wird bei einem Ausfahren des Kolbens durch Aneinandergleiten der beiden Schrägflächen der Säulenkopf fest gegen die Abstützplatte 11 gepreßt. Bei der zweiten Spannvorrichtung wirkt der Bolzen 7 gegen die Stirnfläche der Säule; über die Schraubverbindung zwischen Säule und Säulenmutter wird die Säulenmutter 1 gegen die feste Platte 9 gepreßt.

Bei angezogener Säulenmutter 1 und entsprechender Verspannung der Säule mit der feststehenden Platte 9 und der Abstützplatte 11 kann die Spritzgießmaschine ihren Normalbetrieb ausführen.

Wenn andere Werkzeuge eingebaut werden sollen, wird die Säule 3 in die in der Figur strichpunktiert dargestellte Stellung überführt. Hierzu wird die Säulenmutter 1 von der Säule abgeschraubt und auf eine koaxial dazu angeordnete, mit Außengewinde versehene Gewindebüchse 5 geschraubt. Diese Gewindebüchse ist in einem Gehäuse 4 fest gelagert. Das Abschrauben erfolgt mit Hilfe eines Getriebemotors 2, der mit einer an der Außenseite der Säulenmutter 1 angeordneten Verzahnung zusammenwirkt. Der vorstehend erwähnte Bolzen 7 erstreckt sich axial verschiebbar durch die Gewindebüchse 5. In der Figur ist strichpunktiert die abgeschraubte Stellung der Säulenmutter 1 dargestellt.

Nachdem die Säulenmutter 1 von der Säule 3 gelöst und in die in der Figur dargestellte Stellung überführt und die Verspannung der Säule mit der festen Platte 9 und der Abstützplatte 11 durch Zurückziehen der Kolben der jeweiligen kraftbetätigten Zylinder 8 und 12 gelöst worden ist, kann mit dem Ziehvorgang der Säule begonnen werden. Als Ziehvorrichtung dient ein Hydraulikzylinder 14, dessen Kolbenstange in geeigneter Weise mit dem Säulenkopf 10 in Eingriff steht. Durch Ausfahren der Kolbenstange wird der Säulenkopf und damit die Säule in der Figur nach links bewegt, wie dies strichpunktiert dargestellt ist. Die Bewegung erfolgt soweit, bis genügend Freiraum zur entsprechenden Demontage bzw. Montage der Werkzeuge zur Verfügung steht.

Es versteht sich, daß geeignete Grenztaster 6, 16 und 13 vorgesehen sind, mittels denen die Bewegung der Säule und Säulenmutter begrenzt wird. Diese Grenztaster stoppen die jeweiligen kraftbetätigten Zylinder sowie den Getriebemotor, wenn die jeweilige Endstellung erreicht ist.

## Patentansprüche

1. Presse, insbesondere Spritzgießmaschine, mit einer feststehenden Platte (9), einer beweglichen Platte (15), die in Richtung auf die feststehende Platte (9) und von dieser weg bewegbar ist, indem sie auf parallel angeordneten Trag- und Führungssäulen (3) verschoben wird, und einer Abstützplatte (11), wobei die feststehende Platte (9) und die Abstützplatte (11) in den Endbereichen der Trag- und Führungssäulen (3) angeordnet sind und die feststehende Platte (9) und die bewegliche Platte (15) an ihren zugewandten Seiten Werkzeuge, insbesondere Gesenk- oder Formteile oder -hälften tragen, wobei mindestens eine Trag- und Führungssäule (3) mit einer Säulenmutter (1) gegen die feststehende Platte (9) verschraubt ist, eine Drehvorrichtung vorgesehen ist, mit deren Hilfe die Säulenmutter (1) von der Säule (3) ab- und auf ein benachbartes Element (5) aufschraubbar ist, die Presse eine Spannvorrichtung besitzt, mit der die Säule (3) gegen die Abstützplatte (11) preßbar ist, und eine Verschiebevorrichtung zum axialen Verschieben der Säule (3) nach Abschrauben der Säulenmutter (1) von der Säule (3) und Lösen der Verspannung der Säule (3) mit der Abstützplatte (11) vorgesehen ist, dadurch gekennzeichnet, daß die Presse eine zweite Spannvorrichtung aufweist, mit der Säule (3) und Säulenmutter (1) gegen die feststehende Platte (9) preßbar sind und die einen mit der Stirnfläche der Säule (3) in Eingriff bringbaren Bolzen (7) besitzt, der gegen die Stirnfläche der Säule (3) preßbar ist und sich durch das als Gewindebuchse ausgebildete Element (5) erstreckt.

2. Presse nach Anspruch 1, dadurch gekennzeichnet, daß der mit der Stirnfläche der Säule (3) in Eingriff bringbare Bolzen (7) mit Hilfe eine kraftbetätigten Zylinders (8) gegen die Stirnfläche der Säule (3) preßbar ist.

3. Presse nach Anspruch 1 oder 2, dadurch gekennzeichnet, daß die Drehvorrichtung einen Getriebemotor (2) umfaßt.

4. Presse nach einem der vorangehenden Ansprüche, dadurch gekennzeichnet, daß die Trag- und Führungssäule (3) einen mit der von der beweglichen Platte (15) abgewandten Fläche der Abstützplatte (11) in Eingriff bringbaren Kopf (10) aufweist.

5. Presse nach einem der vorangehenden Ansprüche, dadurch gekennzeichnet, daß die eine Spannvorrichtung einen kraftbetätigten Zylinder (12) aufweist, dessen Kolbenstange mit dem Säulenkopf (10) zusammenwirkt.

6. Presse nach Anspruch 2 oder 5, dadurch gekennzeichnet, daß die kraftbetätigten Zylinder (8, 12) keilförmige Kolbenstangen besitzen, die mit entsprechenden Schrägflächen am Bolzen (7) bzw. Säulenkopf (10) zusammenwirken.

7. Presse nach einem der vorangehenden Ansprüche, dadurch gekennzeichnet, daß die Verschiebevorrichtung (14) einen kraftbetätigten Zylinder umfaßt, dessen Kolbenstange mit dem an der Abstützplatte befindlichen Säulenende, insbesondere dem Säulenkopf (10), in Eingriff steht.

## Claims

1. Press, in particular a die-casting machine, with a stationary plate (9), a movable plate (15), which is able to move in the direction of the stationary plate (9) and away from the latter, in that it is displaced on support and guide columns (3) arranged in parallel, and with a support plate (11), the stationary plate (9) and the support plate (11) being located in the end regions of the support and guide columns (3) and on their sides in facing relationship the stationary plate (9) and the movable plate (15) support tools, in particular die or mould parts or halves, at least one support and guide column (3) being screwed by a column nut (1) against the stationary plate (9), a turning device being provided, by means of which the column nut (1) can be screwed off the column (3) and onto an adjacent member (5), the press comprises a clamping device, by which the column (3) can be pressed against the support plate (11) and a displacement device for the axial displacement of the column (3) after screwing the column nut (1) off the column (3) and releasing the clamping of the column (3) to the support plate (11) is provided, characterised in that the press comprises a second clamping device, by which the column (3) and column nut (1) can be pressed against the stationary plate (9) and which comprises a bolt (7) able to be brought into engagement with the end face of the column (3), which bolt can be pressed against the end face of the column (3) and extends through the member (5) constructed as a threaded bush.

2. Press according to Claim 1, characterised in that the bolt (7) able to be brought into engagement with the end face of the column (3) can be pressed against the end face of the column (3) by means of a power-operated cylinder (8).

3. Press according to Claim 1 or 2, characterised in that the turning device comprises a geared motor (2).

4. Press according to one of the preceding Claims, characterised in that the support and guide column (3) comprises a head (10) able to be brought into engagement with the surface of the support plate (11) remote from the movable plate (15).

5. Press according to one of the preceding Claims, characterised in that the one clamping device comprises a power-operated cylinder (12), whereof the piston rod cooperates with the column head (10).

6. Press according to Claim 2 or 5, characterised in that the power-operated cylinders (8, 12) comprise wedge-shaped piston rods, which cooperate with corresponding inclined surfaces on the bolt (7) or column head (10).

7. Press according to one of the preceding Claims, characterised in that the displacement device (14) includes a power-operated cylinder, whereof the piston rod engages with the end of the column located on the support plate, in particular the column head (10).

## Revendications

1. Presse, notamment machine à mouler par injection, comportant une plaque fixe (9), une plaque mobile (15), qui peut être de'placée dans la direction de cette plaque fixe (9) ou en être écartée en coulissant sur des colonnes (3) parallèles de support et de guidage, ainsi qu'une plaque de soutien (11), la plaque fixe (9) et cette plaque de soutien (11) étant disposées aux extrémités de ces colonnes (3) et cette plaque fixe (9) et la plaque mobile (15) portant sur leurs faces en regard des outils, notamment des moules creux, des moules profilés ou demimoules, l'une au moins des colonnes (3) de support et de guidage étant vissée contre la plaque fixe (9) au moyen d'un écrou (1), la presse comportant encore un mécanisme rotatif à l'aide duquel cet écrou (1) peut être dévissé de la colonne (3) et vissé sur un élément (5) adjacent, ainsi qu'un mécanisme de serrage avec lequel la colonne (3) peut être appliquée contre la plaque de soutien (11), un mécanisme de coulissement étant destiné à faire coulisser axialement la colonne (3) lorsque l'écrou (1) en a été retiré et que la fixation de cette colonne contre la plaque de soutien (11) a été supprimée, presse caractérisée en ce qu'elle comporte un second mécanisme de serrage, avec lequel la colonne (3) et l'écrou (1) peuvent être appliqués contre la plaque fixe (9) et qui comporte un mandrin (7) pouvant être amené en contact avec la surface d'extrémité de la colonne (3), et pouvant être repoussé et appliqué contre cette face d'extrémité en coulissant dans l'élément (5), qui est un manchon fileté.

2. Presse selon la revendication 1, caractérisée en ce que le mandrin (7), qui peut être amené en contact avec la face d'extrémité de la colonne (3), peut être appliqué contre cette face d'extrémité à l'aide d'un vérin (8).

3. Presse selon la revendication 1 ou 2, caractérisée en ce que le mécanisme rotatif est ou comprend un motoréducteur (2).

4. Presse selon l'une des revendications précédentes, caractérisée en ce que la colonne (3) de support et de guidage comporte une tête (10), qui peut être amenée en contact avec la face de la plaque de soutien (11) située du côté opposé à la plaque mobile (15).

5. Presse selon l'une des revendications précédentes, caractérisée en ce que le premier mécanisme de serrage comporte un vérin (12), dont la tige du piston coopère avec la tête (10) de la colonne.

6. Presse selon la revendication 2 ou 5, caractérisée en ce que les vérins (8, 12) comportent des tiges de piston cunéiformes, qui coopèrent avec des surfaces obliques respectives du mandrin (7) et de la tête (10) de la colonne.

7. Presse selon l'une des revendications précédentes, caractérisée en ce que le mécanisme de coulissement (14) est un vérin dont la tige du piston est en prise avec l'extrémité de la colonne (3) qui se trouve sur la plaque de soutien, notamment la tête (10) de cette colonne.
